# EUROPÄISCHE PATENTSCHRIFT

(11) **EP 2 513 189 B1**
(45) Veröffentlichungstag und Bekanntmachung des Hinweises auf die Patenterteilung: **14.10.2015**
(21) Anmeldenummer: 10796362.1
(22) Anmeldetag: 15.12.2010
(51) Int. Cl.: C08G 63/12, C08G 63/16, C08G 18/00, C08G 18/08, C08G 63/78, C08K 5/524

(54) **VERFAHREN ZUR HERSTELLUNG VON POLYESTERPOLYOLEN, DIE DAMIT HERGESTELLTEN POLYESTERPOLYOLE UND DARAUS ERHALTENE POLYURETHANE**
METHOD FOR PRODUCING POLYESTER POLYOLS, POLYESTER POLYOLS PRODUCED BY SAID METHOD AND POLYURETHANES OBTAINED THEREFROM
PROCÉDÉ DE PRÉPARATION DE POLYOLS DE POLYESTER, POLYOLS DE POLYESTER PRÉPARÉS À L'AIDE DE CES DERNIERS ET POLYURÉTHANES OBTENUS À PARTIR DE CES DERNIERS

(30) Priorität: 16.12.2009 EP 09179515
(43) Veröffentlichungstag der Anmeldung: 24.10.2012
(73) Patentinhaber: BASF SE, 67056 Ludwigshafen (DE)
(72) Erfinder: GEHRINGER, Lionel, F-67470 Schaffhouse-pres-Seltz (FR); DUWENHORST, Jörn, 49448 Lemförde (DE); LAMMERS, Fin, 49459 Lembruch (DE); WILMS, Axel, 67227 Frankenthal (DE)
(86) Internationale Anmeldenummer: PCT/EP2010/069749
(87) Internationale Veröffentlichungsnummer: WO 2011/083000

(56) Entgegenhaltungen:
- EP-A1- 1 195 395
- EP-A1- 1 391 472
- WO-A1-2008/087078
- WO-A1-2009/094365
- US-A- 5 869 582

## Beschreibung

Die vorliegende Erfindung betrifft ein Verfahren zur Herstellung von Polyesterpolyolen, insbesondere ausgehend von natürlichen Rohstoffen, sowie Polyesterpolyole. Ferner betrifft die Erfindung die weitere Umsetzung der beschriebenen Polyesterpolyole zu Polyurethanen mit heller Eigenfarbe und guten mechanischen Eigenschaften.

Polymere Hydroxylverbindungen wie Polyesterpolyole reagieren mit Isocyanaten zu Polyurethanen, die je nach ihren spezifischen mechanischen Eigenschaften vielfältige Einsatzmöglichkeiten finden. Insbesondere Polyesterpolyole werden aufgrund ihrer günstigen Eigenschaften für hochwertige Polyurethanprodukte verwendet. Die spezifischen Eigenschaften der betreffenden Polyurethane hängen hierbei stark von der Art der eingesetzten Polyesterole ab.

Zur Herstellung von Polyurethanen ist es insbesondere wichtig, dass die eingesetzten Polyesterpolyole eine niedrige Säurezahl besitzen (Ullmann's Encyclopedia, Electronic Release, Wiley-VCH-Verlag GmbH, Weinheim, 2000, "Polyesters", Absatz 2.3 "Quality Specifications and Testing"). Die Säurezahl sollte möglichst gering sein, da die endständigen Säuregruppen langsamer mit Diisocyanaten reagieren als terminale Hydroxylgruppen. Polyesterpolyole mit hohen Säurezahlen führen daher zu Polyurethanen mit einem geringeren Molekulargewicht.

Ein Problem beim Einsatz von Polyesterpolyolen mit hohen Säurezahlen zur Herstellung von Polyurethanen ist, dass sich bei der Reaktion der zahlreichen endständigen Säuregruppen mit Isocyanaten eine Amidbindung unter Freisetzung von Kohlendioxid bilden kann. Das gasförmige Kohlendioxid kann zu einer unerwünschten Blasenbildung und nachteiligen mechanischen Eigenschaften führen. Weiterhin verschlechtern freie Carboxylgruppen die Katalyse bei der Polyurethan-Reaktion und auch die Stabilität der hergestellten Polyurethane gegenüber Hydrolyse. Dieser Effekt lässt sich zwar durch einen höheren Gehalt an Stabilisatoren ausgleichen, führt aber u.a. auch zu zusätzlichen Kosten.

Je nach ihrem chemischen Aufbau lassen sich die Polyesterpolyole in zwei Gruppen einteilen, die Hydroxycarbonsäure-Typen (AB-Polyesterpolyole) und die Dihydroxy-Dicarbonsäure-Typen (AA-BB-Polyesterpolyole).

Erstere werden aus nur einem einzigen Monomer durch z.B. Polykondensation einer ω-Hydroxycarbonsäure oder durch Ringöffnungspolymerisation cyclischer Ester, sogenannter Lactone, hergestellt. Die Herstellung der AA-BB-Polyester-Typen erfolgt hingegen durch Polykondensation zweier komplementärer Monomere in der Regel durch die Umsetzung von mehrfunktionalen Polyhydroxylverbindungen (z.B. Diole, Triole oder Polyole) mit mehreren funktionellen Carbonsäuren, insbesondere Dicarbonsäuren (z.B. Adipinsäure oder Sebacinsäure).

Die Polykondensation von mehrfunktionalen Polyhydroxylverbindungen und Dicarbonsäuren zu Polyesterpolyolen des Typs AA-BB wird großtechnisch in der Regel bei hohen Temperaturen von 160 bis 280°C durchgeführt. Dabei kann die Polykondensationsreaktionen sowohl in Gegenwart als auch in Abwesenheit eines Lösungsmittels durchgeführt werden. Ein Nachteil dieser Polykondensationen bei hohen Temperaturen ist jedoch, dass diese verhältnismäßig langsam ablaufen. Um die Polykondensationsreaktion bei hohen Temperaturen zu beschleunigen, werden daher häufig Veresterungskatalysatoren eingesetzt. Als klassische Veresterungskatalysatoren dienen hierbei vorzugsweise metallorganische Verbindungen, wie z.B. Titantetrabutylat, Zinndioktoat oder Dibutylzinndilaurat, oder Säuren, wie z.B. Schwefelsäure, p-Toluolsulfonsäure oder Basen, wie z.B. Kaliumhydroxid oder Na-Methanolat. Diese Veresterungskatalysatoren sind bevorzugt homogen und verbleiben nach Beendigung der Reaktion in der Regel im Produkt (Polyesterpolyol).

Die Verwendung natürlicher Rohstoffe gewinnt in der Polymer-Industrie wachsende Bedeutung, da die Ausgangsprodukte mitunter deutlich kostengünstiger und teilweise nahezu unbegrenzt verfügbar sind.

Als natürliche Rohstoffe werden insbesondere Substanzen bezeichnet, die durch Verarbeitung aus Pflanzen, beziehungsweise Teilen von Pflanzen (oder auch Tieren), gewonnen werden. Charakteristisch für Rohstoffe aus nachwachsenden Quellen ist ein signifikant hoher Anteil des Kohlenstoff-Isotop¹⁴C. Mittels dessen Bestimmung lässt sich der Anteil nachwachsender Rohstoffe experimentell bestimmen. Nachwachsende Rohstoffe unterscheiden sich von durch chemische Synthese bzw. durch Erdölverarbeitung gewonnenen Stoffen darin, dass sie weniger homogen sind - ihre Zusammensetzung kann deutlich stärker variieren.

Diese Schwankungen in der Zusammensetzung natürlicher Rohstoffe und das Vorhandensein weiterer, schwer abtrennbarer Begleitstoffe, wie Abbauprodukte oder Verunreinigungen, führen jedoch häufig zu Problemen bei der späteren Verarbeitung und schränken den industriellen Nutzen dieser Stoffe deshalb ein.

Schwankungen in der Zusammensetzung von natürlichen Rohstoffen sind beispielsweise abhängig von Faktoren wie Klima und Region, in der die Pflanze wächst, Jahreszeit der Ernte, Variationen zwischen biologischen Arten und Unterarten und der Art der bei der Gewinnung eingesetzten Extraktionsverfahren (Extrusion, Zentrifugierung, Filterung, Destillation, Schnitt, Pressung etc.).

Die Herstellung von Polyesterpolyolen durch Umsetzung von aus natürlichen Rohstoffen gewonnenen Edukten ist speziell für die Herstellung von (thermoplastischen) Polyurethanen, beispielsweise für die Schuhindustrie, von großem Interesse. Aufgrund der Verunreinigungen und/oder Abbauprodukte, die Edukte aus natürlichen Rohstoffen enthalten können, finden daraus hergestellte Polyesterpolyole bislang keine großtechnische Verwendung. Ein Grund hierfür sind die aus den Verunreinigungen resultierende starke Verfärbung der gewonnenen Polyesterpolyole und/oder Fehler in der Funktionalität. Diese starke Verfärbung sorgt dafür, dass eine technisch sinnvolle Umsetzung dieser Polyesterpolyole zu Polyurethanen nicht möglich ist. Oftmals sind die Produkte so dunkel, dass sie nicht für optisch anspruchsvolle Anwendungen verwendet werden können. Häufig haben technische Flüssigkeiten, wie flüssige Polyesterpolyole, teilweise durch Verunreinigungen oder Abbauprodukte verursacht, einen unerwünschten Gelbstich.

Für die Anwendung in thermoplastischen Polyurethanen (TPU) ist außerdem die Einhaltung einer Funktionalität des Polyesterpolyols von zwei (2) eine Voraussetzung für die gute Verarbeitbarkeit im Spritzguss und insbesondere bei der Extrusion. Bereits durch sehr geringe Mengen höherfunktioneller Verunreinigungen kann es zu einer unvorteilhaften Vernetzung im thermoplastischen Polyurethan kommen.

Die farbliche Klassifizierung von technischen Flüssigkeiten kann nach der APHA/HAZEN-Farbbewertung erfolgen. Die Empfehlung dieses Verfahrens durch die American Public Health Organisation (APHA) führte zur entsprechenden Bezeichnung.

Das Prinzip dieser Farbbewertung besteht darin, die Analysenproben visuell in genormten Gefäßen mit in der Konzentration abgestuften gelben Standardlösungen zu vergleichen. Für die APHA-/HAZEN-Farbzahl wird nach einem Vorschlag von A. Hazen aus dem Jahre 1892 eine saure Lösung von Kalium-hexachloroplatinat(IV) und Kobalt(II)chlorid eingesetzt. Den Vergleichslösungen wird dann eine Farbzahl entsprechend ihrem Platingehalt in mg/l (Bereich ist 0-600) zugeordnet.

Das Dokument WO 1992/00947 beschreibt Verfahren der Veresterung von Oxyhydrocarbon-Polyolen unter Zugabe von Reduktionsmitteln, wie beispielsweise Natriumborhydrid, Lithiumaluminiumhydrid und Natrium, die zu einer helleren Farbe des Produkts führen. Darüber hinaus wird die Synthese zur Herstellung von Fettsäureestern einiger Alkylglucoside sowie die Umesterung und Cyclisierung aus Fettsäureestern auf niedere Alkohole beschrieben. Die daraus resultierenden, leicht nachdunkelnden Polyolmischungen werden in dem beschriebenen Verfahren vor und während des Veresterungsprozesses mit dem Reduktionsmittel behandelt. In einem zusätzlichen Schritt, der vor der Veresterung erfolgt, wird beispielsweise bei 170 °C eine Cyclisierung von Sorbitol zu Sorbitan unter Anwesenheit von Hypophosphit-Ionen durchgeführt. Die Menge an verwendeten Hypophosphit-Ionen wird mit 0,2 bis 0,7 Gew.-% bezogen auf die Polyolkomponente beschrieben.

In EP-A 0 572 256 wird die Herstellung von biologisch abbaubaren, hochmolekularen aliphatischen Polyestern beschrieben. Beispielsweise wird zu dem geschmolzenen aliphatischen Polyester eine Phosphorkomponente gegeben, die ausgewählt sein kann aus der Gruppe der organischen Phosphorsäureester, wie Triphenylphosphit, Diphenylisodecylphosphit, Phenyldiisodecylphosphit, Tris(mono und/oder dinonylphenyl)phosphit und Trisisodecylphosphit. Es wird ferner beschrieben, dass diese phosphorhaltige Komponente als Stabilisator dient, die thermische Stabilität erhöht, die Verfärbung verhindert und Viskositätsschwankungen vermeidet.

In US 4,677,154 wird die Herstellung von thermoplastischen, verfärbungsarmen Polyurethanen beschrieben. Durch den speziellen Herstellungsprozess und den Zusatz eines speziellen Stabilisatorpakets (BHT), bestehend aus diversen Komponenten, unter anderem auch Phosphiten, können Reaktionsprodukte in Form von weniger gefärbten bzw. hellen thermoplastischen Polyurethanen hergestellt werden.

In EP-A 1 195 395 werden thermoplastisch verarbeitbare Polyurethanelastomere mit verbesserter Eigenfarbe beschrieben. Durch den Einsatz von speziell substituierten Pentaerythritoldiphosphiten kann eine verbesserte Eigenfarbe erzielt werden. Der Zusatz des Pentaerythritoldiphosphits erfolgt vor oder während der Polyurethanherstellung.

In DE-A 10 121 866 wird ein Verfahren zur Herstellung von hellfarbigen Fettsäurepolyolestern durch Umsetzung von Fettsäurealkylestern mit Polyolen beschrieben. Die Reaktion wird in Gegenwart von Reduktionsmitteln und Alkalibasen durchgeführt.

In JP-A 7309 937 werden gering gefärbte Polyester und deren Herstellung beschrieben. In dem Herstellungsverfahren werden diverse Stabilisatoren wie u. a. auch Tris(2,4-di-t-butylphenyl)phosphite verwendet.

In WO 2008/031592 wird ein Verfahren zur Herstellung von auf Dianhydrohexitol basierenden Polyestern vorgestellt. Als Dicarbonsäuren werden für den Herstellungsprozess unter anderem Succininsäure, Glutarsäure, Adipinsäure oder Sebacinsäure verwendet. Bevorzugte Alkohole sind 1,3-Propandiol, 1,4-Butandiol, 2,3-Butandiol und/oder Trimethylolpropan.

Nachteilig an den Verfahren aus dem genannten Stand der Technik ist, dass bislang keine Verfahren bereit gestellt sind, die auf natürlichen Rohstoffen basieren, die ohne weitere Aufreinigung zu hellfarbigen Polyesterpolyolen führen, die dann für eine Umsetzung zur Polyurethanen geeignet sind.

Eine Aufgabe der Erfindung besteht darin, ein Verfahren bereitzustellen, dass es ermöglicht, aus natürlichen Rohstoffen, insbesondere natürlichen Carbonsäuren und/oder Polyolen, Polyesterpolyole herzustellen, wobei diese Polyesterpolyole eine geringe Färbung aufweisen und insbesondere die weitere Umsetzung zu Polyurethanen positiv beeinflussen sollen.

Es wurde überraschenderweise gefunden, dass aus natürlichen Rohstoffen gewonnene Carbonsäuren, die mindestens zwei Säuregruppen aufweisen, durch Zusatz von organischen Phosphiten während des Herstellungsverfahrens zu Polyesterpolyolen helle Polyesterpolyole liefern. Diese Polyesterpolyole können dann zu Polyurethanen mit geringer (heller) Eigenfarbe umgesetzt werden.

Außerdem zeichnet sich das thermoplastische Polyurethan durch eine hohe Transparenz aus.

Gegenstand der vorliegenden Erfindung ist ein Verfahren zur Herstellung eines Polyesterpolyols, umfassend die folgenden Verfahrensschritte:
(a) Herstellung einer Reaktionsmischung enthaltend die folgenden Komponenten:
   A: mindestens eine aus natürlichen Rohstoffen gewonnene Carbonsäure mit mindestens zwei Säuregruppen, ausgewählt aus der Gruppe bestehend aus: Sebazinsäure, Azelainsäure, Dodecandisäure und Bernsteinsäure;
   B: mindestens einen mehrwertigen Alkohol,
   C: mindestens eine organische Phosphitverbindung,
   D: mindestens eine Lewis-Säure;
(b) Erwärmen der Reaktionsmischung auf eine Temperatur von mindestens 160 °C und Abtrennung des bei der Reaktion entstehenden Wassers;
(c) Erwärmen der Reaktionsmischung auf eine Temperatur von mindestens 210 °C bei einem Druck unterhalb von 1013 mbar für einen Zeitraum von 0,1 bis 25 Stunden.

Der Zeitraum der Vakuumphase (Schritt c) liegt häufig bei 1 bis 22 Stunden, bevorzugt bei 5 bis 20 Stunden.

Die organischen Carbonsäuren, die mindestens zwei Säuregruppen (Carboxylgruppen) aufweisen, können durch spezielle Aufbereitungsverfahren aus natürlichen Rohstoffen gewonnen werden. So kann beispielsweise durch Behandlung von Rizinusöl mit Natrium- oder Kaliumhydroxid bei hohen Temperaturen in Gegenwart von längerkettigen Alkoholen (wie 1- oder 2-Octanol) je nach Reaktionsbedingungen unter anderem Sebacinsäure in einer Reinheit von > 99,5 % als wichtiger Rohstoff erhalten werden. Sebacinsäure (1,8-Octandicarbonsäure) gehört zur homologen Reihe der aliphatischen Dicarbonsäuren.

Neben der Sebacinsäure sind Bernsteinsäure und/oder 2-Methylbernsteinsäure besonders geeignet. Diese können aus natürlichen Rohstoffen wie Zucker oder Mais durch Fermentation gewonnen werden.

Insbesondere können auch eine oder mehrere, z. B. zwei oder drei verschiedene Carbonsäuren aus der Gruppe der C₂ bis C₁₂ Dicarbonsäuren eingesetzt werden. Unter C₂ bis C₁₂-Dicarbonsäuren werden Dicarbonsäuren verstanden, die aliphatisch oder verzweigt sind, und zwei bis zwölf Kohlenstoffatome aufweisen. Es ist auch möglich, dass C₂ bis C₁₄ Dicarbonsäuren, bevorzugt C₄ bis C₁₂ Dicarbonsäuren und insbesondere bevorzugt um C₆ bis C₁₀ Dicarbonsäuren eingesetzt werden.

Die mindestens eine aus natürlichen Rohstoffen gewonnene Dicarbonsäure kann ferner auch als Carbonsäurediester oder als Carbonsäureanhydrid vorliegen.

Als Dicarbonsäure sind im Prinzip aliphatische und/oder aromatische Dicarbonsäurenbekannt. Erfindungsgemäß ist die aus natürlichen Rohstoffen gewonnene Dicarbonsäure (A) ausgewählt aus der Gruppe bestehend aus: Sebazinsäure, Azelainsäure, Dodecandisäure und Bernsteinsäure. Der mehrwertige Alkohol (B) wird beim erfindungsgemäßen Verfahren insbesondere ausgewählt aus der Gruppe bestehend aus 1,3-Propandiol, 1,2-Ethandiol und Butandiolen (insbesondere 1,4-Butandiol). In einer weiteren bevorzugten Ausführungsform der Erfindung handelt es sich bei Komponente A um aus nachwachsenden Rohstoffen gewonnene Sebazinsäure.

In einer Ausführungsform der Erfindung ist die Komponente B ein aliphatisches C₂ bis C₆- Diol. Als aliphatisches C₂ bis C₆- Diol eignen sich vor allem mehrwertige Alkohole (B), vorzugsweise Diol-Komponenten wie z.B. Ethylenglykol, Diethylenglykol, 3-Oxapentan-1,5-diol, 1,3-Propandiol, 1,2-Propandiol, Dipropylenglycol, 1,4-Butandiol, 1,5-Pentandiol, 1,6-Hexandiol, 2-Methyl-1,3-propandiol und 3-Methyl-1,5-pentandiol. Bevorzugt handelt es sich bei bei Komponente B um 1,3-Propandiol oder 1,4-Butandiol.

In einer weiteren Ausführungsform wird als Komponente B ein aliphatisches Diol mit 2 bis 14 Kohlenstoffatomen, insbesondere ein C₄ bis C₁₂-Diol eingesetzt.

Zur Erhöhung der Funktionalität der Polyesteralkohole können auch drei- oder höherfunktionelle Alkohole eingesetzt werden. Beispiele hierfür sind Glycerin, Trimethylolpropan und Pentaerythrit. Möglich ist auch der Einsatz oligomerer oder polymerer Produkte mit mindestens zwei Hydroxylgruppen. Beispiele hierfür sind Polytetrahydrofuran, Polylactone, Polyglycerol, Polyetherole, Polyesterol oder α,ω-Dihydroxypolybutadien.

Bei dem 1,3-Propandiol kann es sich auch um synthetisch hergestelltes 1,3-Propandiol, insbesondere jedoch um 1,3-Propandiol aus nachwachsenden Rohstoffen ("Bio-1,3-Propandiol"), handeln. Bio-1,3-Propandiol kann beispielsweise aus Mais und/oder Zucker gewonnen werden. Eine weitere Möglichkeit ist die Umwandlung von Glycerinabfällen aus der Biodiesel-Produktion. In einer besonders bevorzugten Ausführungsform der Erfindung handelt es sich bei Komponente B um 1,3-Propandiol, wobei dieses bevorzugt auch aus nachwachsenden Rohstoffen gewonnen wird.

In dem erfindungsgemäßen Verfahren können alle dem Fachmann bekannten organischen Phosphitverbindungen (C) verwendet werden. Bevorzugt werden organische Phosphitverbindungen vom Typ POR₃ verwendet, wobei R ein linearer, verzweigter und/oder aromatischer C₁ bis C₁₂ Rest sein kann. Organische Phosphite sind Ester von Phosphonsäuren. Beispiele für kommerziell erhältliche organische Phosphite sind die Produkte der Irgafos® -Reihe von Ciba Speciality Chemicals (Schweiz) beziehungsweise BASF SE (Deutschland, Ludwigshafen).

In einer insbesondere bevorzugten Ausführungsform der Erfindung handelt es sich bei Komponente C um mindestens eine organische Phosphitverbindung, die ausgewählt ist aus der Gruppe bestehend aus Bis(2,4-di-tert-butyl-6-methylphenyl)-ethylphosphit, Tris(nonylphenyl)-phosphit oder das Reaktionsprodukt aus Phosphortrichlorid mit 1,1'-Biphenyl und 2,4- bis(tert-Butyl)phenol (Irgaphos® P-EPQ).

Die Phosphitverbindung kann in einer Konzentration von 100 bis 10000 ppm, insbesondere 200 bis 2000 ppm und bevorzugt von 500 bis 1000 ppm eingesetzt werden (bezogen auf die Gesamtmenge Stabilisator). Die Phosphitverbindung wird vorzugsweise eingesetzt in einer Konzentration von 5 bis 1500 ppm, insbesondere 10 bis 400 ppm und bevorzugt 20 bis 150 ppm, bezogen auf die aktiven Zentren. Unter aktiven Zentren versteht man dabei die chemischen Zentren, die eine Farbreaktion verhindern. In diesem Falle sind die aktiven Zentren die Phosphoratome der Phosphite.

In dem erfindungsgemäßen Verfahren können die dem Fachmann bekannten Lewis-Säuren verwendet werden. Unter Lewis-Säuren werden Stoffe verstanden, die unter Bildung einer kovalenten Bindung ein Elektronenpaar aufnehmen können (Elektronen-paar-Akzeptoren). Bekannte Beispiele für Lewis-Säuren sind BF₃, AlH₃, SiF₄, PF₃, SnCl₄, SO²⁺, SO³⁺, H⁺, Mg²⁺, Al³⁺, Cu²⁺, Hg⁺, Ti⁴⁺ und Sn²⁺.

In einer bevorzugten Ausführungsform der Erfindung wird die mindestens eine Lewis-Säure ausgewählt aus der Gruppe bestehend aus Titantetrabutanolat, Titantetraisopropoxid, Zinndioctoat, Dibutylzinnlaurat und Zinnchloride.

In einer besonderen Ausgestaltung der Erfindung erfolgt die Herstellung der Reaktionsmischung in Verfahrensschritt (a) dadurch, dass zunächst die Komponenten A, B und D gemischt werden und erst anschließend Komponente C hinzugefügt wird. Die Komponente C kann hierbei im Prinzip zu jedem Zeitpunkt vor dem Start der Reaktion der Dicarbonsäure zum Polyesterpolyol zu der Reaktionsmischung zugegeben werden, in der Regel erfolgt die Zugabe bei Temperaturen von 20 °C bis maximal 120 °C.

Das erfindungsgemäße Verfahren wird vorzugsweise lösungsmittelfrei durchgeführt.

Durch das erfindungsgemäße Verfahren können insbesondere Polyesterpolyole hergestellt werden, die eine niedrige APHA/HAZEN-Farbzahl aufweisen. Nach Durchführung des erfindungsgemäßen Verfahrens kann das Polyesterpolyol vorzugsweise eine Farbzahl aufweisen, die zwischen 10 und 200 APHA/HAZEN liegt. Bevorzugt sind APHA/HAZEN-Farbzahlen von 10 bis 195, insbesondere 10 bis 150, ganz besonders von unter 150.

Die Säurezahlen der hergestellten Polyesterpolyole liegen vorzugsweise im Bereich von weniger als 3 g KOH / kg, bevorzugt im Bereich von weniger als 2 g KOH / kg, insbesondere im Bereich von weniger als 1 g KOH / kg. Die Säurezahl dient zur Bestimmung des Gehalts an freien organischen Säuren im Polyesterpolyol. Die Säurezahl wird beispielsweise ermittelt durch die Menge an KOH in mg (bzw. g KOH), die zur Neutralisation einer Menge von 1 g (bzw. 1 kg) der Probe verbraucht wird.

Die üblichen Apparaturen zur Herstellung von Polyesterpolyolen sind dem Fachmann bekannt.

Ferner umfasst die Erfindung ein Polyesterpolyol-Produkt, welches durch das erfindungsgemäße Verfahren erhältlich ist (bzw. erhalten wird).

Eine bevorzugte Ausführungsform der Erfindung betrifft Polyesterpolyole, erhältlich durch das oben beschriebene Verfahren, bei dem als Komponente A Sebazinsäure verwendet wird. Eine weiter bevorzugte Ausführungsform der Erfindung betrifft Polyesterpolyole, erhältlich durch das oben beschriebene Verfahren, wobei als Komponente A aus nachwachsenden Rohstoffen gewonnene Sebazinsäure und als Komponente B ein Diol verwendet werden.

Ein weiterer Gegenstand der Erfindung betrifft ein Verfahren zur Herstellung eines thermoplastischen Polyurethans durch Umsetzung eines nach dem erfindungsgemäßen Verfahren hergestellten (bzw. herstellbaren) Polyesterpolyols mit einem oder mehreren organischen Diisocyanaten (oder Polyisocyanaten).

Die Herstellung der Polyurethane kann im Prinzip nach den bekannten Verfahren, diskontinuierlich oder kontinuierlich, beispielsweise mit Reaktionsextrudern oder dem Bandverfahren nach "one-shot" oder dem Prepolymerverfahren (auch mehrstufige Pre-polymerverfahren, siehe z. B. US 6,790,916), bevorzugt jedoch nach dem "one-shot"-Verfahren erfolgen. Bei diesen Verfahren können die zur Reaktion kommenden Komponenten Polyesterol, Kettenverlängerer, Isocyanat (siehe Tabelle 1) und gegebenenfalls Hilfsstoffe und Additive (insbesondere UV Stabilisatoren) nacheinander oder gleichzeitig miteinander vermischt werden, wobei die Reaktion unmittelbar einsetzt. Nähere Angaben über die oben genannten Hilfsmittel- und Zusatzstoffe sind der Fachliteratur zu entnehmen, zum Beispiel aus "Plastics Additive Handbook", 5th Edition, H. Zweifel, ed, Hanser Publishers, München, 2001; H. Saunders und K. C. Frisch "High Polymers", Band XVI, Polyurethane, Teil 1 und 2, Verlag Interscience Publishers 1962 and 1964; Taschenbuch für Kunststoff-Additive von R. Gachter und H. Muller (Hanser Verlag München 1990) oder DE-A 29 01 774.

Apparaturen zur Herstellung von Polyurethanen sind dem Fachmann bekannt.

Ferner umfasst die Erfindung ein thermoplastisches Polyurethan, welches durch das erfindungsgemäße Verfahren erhältlich ist.

Das Polyurethan, welches aus einem nach dem erfindungsgemäßen Verfahren hergestellten Polyesterpolyol erhalten wird, ist Insbesondere ein thermoplastisches Polyurethan. Thermoplastische Polyurethane werden nachfolgend auch TPU genannt.

Ein weiterer Gegenstand der vorliegenden Erfindung betrifft die Verwendung eines nach dem erfindungsgemäßen Verfahren hergestellten Polyesterpolyols zur Produktion von Polyurethanen (im Folgenden auch als PUR bezeichnet), insbesondere von PUR-Weichschaum, PUR-Hartschaum, Polyisocyanurat (PIR) Hartschaum, nicht zellulären PUR-Materialien oder Potyurethandispersionen. Die wie oben beschriebenen Polyurethane können u. a. zur Herstellung von Matratzen, Schuhsohlen, Dichtungen, Schläuchen, Fußböden. Profilen, Lacken, Klebstoffen, Dichtstoffen, Skier. Autositzen Laufbahnen in Stadien, Instrumententafeln, diversen Formkörpern, Vergussmassen, Folien, Fasern, Non-Wooven und/oder Gussböden verwendet werden.

Die nach dem erfindungsgemäßen Verfahren hergestellten thermoplastischen Polyurethane können transparent sein und einen Gelbgrad (YI, yellow Index) von kleiner 20 besitzen. Der Gelbgrad bezeichnet allgemein einen Parameter bei der Messung der Farbe von transparenten Kunststoffen.

Ferner betrifft die Verwendung von Polyesterpolyolen zur Herstellung von Polyurethanen, die Herstellung von (geschäumten) Weichschaum- und/oder kompakten Gießsystemen.

Ein weiterer Gegenstand der vorliegenden Erfindung betrifft die Verwendung eines nach dem erfindungsgemäßen Verfahren hergestellten thermoplastischen Polyurethans zur Herstellung von Formkörpern, Schläuchen, Folien und/oder Fasern.

Ein weiterer Gegenstand der vorliegenden Erfindung betrifft einen Formkörper, eine Folie, einen Schlauch oder eine Faser, hergestellt aus einem thermoplastischen Polyurethan basierend auf dem erfindungsgemäßen Verfahren.

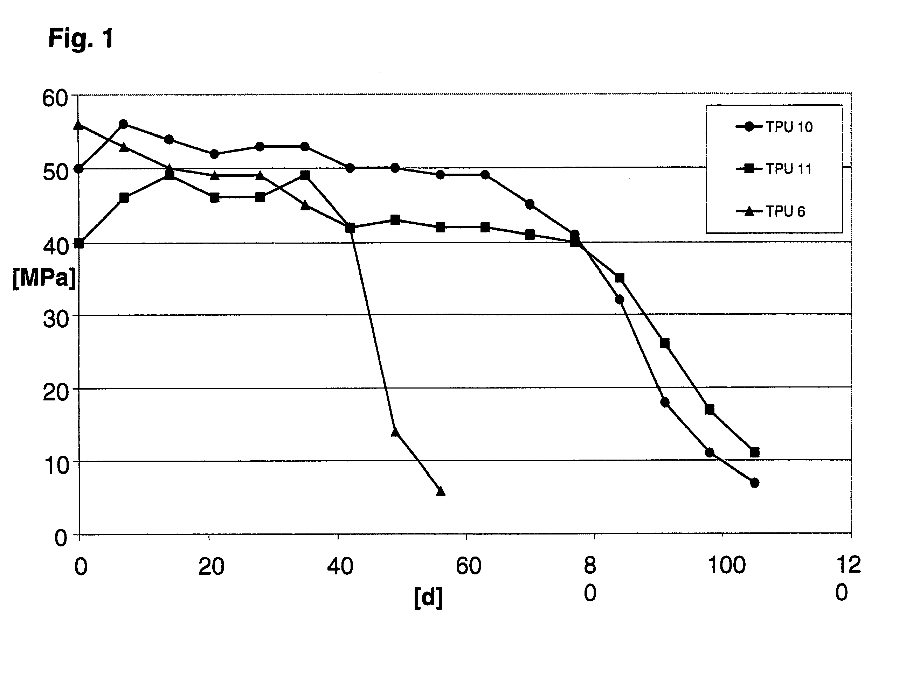

Zu der Figur
- Fig. 1: zeigt ein Diagramm zu den mechanischen Eigenschaften der thermoplastischen Polyurethane gemäß den Beispielen mit thermoplastischen Polyurethanen [TPU] 6, 10 und 11. Es ist die Abhängigkeit der Zugfestigkeit [MPa] von der Lagerdauer in 80°C warmem Wasser in Tagen [d] gezeigt.
Die Abbildung zeigt, dass es durch die Anwendung der organischen Phosphite im Verfahren nicht zum Verlust der Beständigkeit des Produkts gegenüber Wasser kommt.

### Beispiele

Die Farbzahlbestimmung wurde mit dem Farbzahlmessgerät LICO150 (Fa. Hach Lange GmbH) durchgeführt. Vor Einfüllung in eine Einwegglas-Rundküvette (mit 11 mm Durchmesser), wurden die Proben auf 90°C im Wärmeschrank erhitzt und dann Blasen-frei (mit Hilfe eines Ultraschallbads) in die Küvette gefüllt. Das Ergebnis der Farbbestimmung kann als Jodfarbzahl und/oder als Hazenfarbzahl (APHA) angezeigt werden.

### Beispiel 1 (Vergleichsbeispiel)

4754.2 g Sebazinsäure, 2092.9 g Propandiol-1,3, 1 ppm Titantetrabutanolat und 5 ppm Zinn-octoat wurden bei Raumtemperatur in einen Rundkolben mit einem Volumen von 12 Litern gefüllt. Die Mischung wurde unter Rühren langsam auf 180 °C erhitzt und dann 3 Stunden lang bei dieser Temperatur (unter Rühren) belassen. Dabei wurde das entstehende Wasser durch Destillation bei Normaldruck entfernt.

Danach wurde die Mischung im Vakuum auf 220 °C erwärmt und bei dieser Temperatur unter einem Vakuum von 40 mbar belassen, bis eine Säurezahl von kleiner 1 mg KOH/g erreicht war. Der entstandene, flüssige Polyesterpolyol wies die folgenden Kennwerte auf:

| | |
|---|---|
| Hydroxylzahl: | 81.0 mg KOH/g |
| Säurezahl: | 0.1 mg KOH/g |
| Wasser: | 0.002 (Gew.-%) |
| Viskosität: | 305 mPa·s (bei 75 °C) |
| Farbzahl: | 422 APHA/Hazen |

### Beispiel 2 (Vergleichsbeispiel)

4754.2 g Sebazinsäure, 2092.9 g bio-Propandiol-1,3 (von DuPont), 1 ppm Titantetrabutanolat und 5 ppm Zinn-ocatat wurden bei Raumtemperatur in einen Rundkolben mit einem Volumen von 12 Litern gefüllt. Die Mischung wurde unter Rühren langsam auf 180 °C erhitzt und dann 3 Stunden lang bei dieser Temperatur (unter Rühren) belassen. Dabei wurde das entstehende Wasser durch Destillation bei Normaldruck entfernt.

Danach wurde die Mischung im Vakuum auf 220 °C erwärmt und bei dieser Temperatur unter einem Vakuum von 40 mbar belassen, bis eine Säurezahl von kleiner 1 mg KOH/g erreicht war. Der entstandene, flüssige Polyesterpolyol wies die folgenden Kennwerte auf:

| | |
|---|---|
| Hydroxylzahl: | 74.5 mg KOH/g |
| Säurezahl: | 0.1 mg KOH/g |
| Wasser: | 0.003 (Gew.-%) |
| Viskosität: | 390 mPa·s (bei 75 °C) |
| Farbzahl: | 600 APHA/Hazen |

### Beispiel 3 (Vergleichsbeispiel)

4627.6 g Sebazinsäure, 2198.0 g Propandiol-1,3, 1ppm Titantetrabutanolat und 5ppm Zinn-octoat wurden bei Raumtemperatur in einen Rundkolben mit einem Volumen von 12 Litern gefüllt. Die Mischung wurde unter Rühren langsam auf 180 °C erhitzt und dann 3 Stunden lang bei dieser Temperatur (unter Rühren) belassen. Dabei wurde das entstehende Wasser durch Destillation bei Normaldruck entfernt.

Danach wurde die Mischung im Vakuum auf 220 °C erwärmt und bei dieser Temperatur unter einem Vakuum von 40 mbar belassen, bis eine Säurezahl von kleiner 1 mg KOH/g erreicht war. Der entstandene, flüssige Polyesterpolyol wies die folgenden Kennwerte auf:

| | |
|---|---|
| Hydroxylzahl: | 112.0 mg KOH/g |
| Säurezahl: | 0.04 mg KOH/g |
| Wasser: | 0,004 (Gew.-%) |
| Viskosität: | 175 mPa·s (bei 75 °C) |
| Farbzahl: | 380 APHA/Hazen |

### Beispiel 4

4754.2 g Sebazinsäure, 2092.9 g Propandiol-1,3, 160 ppm Irgafos 38 (von Ciba), 1 ppm Titantetrabutanolat und 5ppm Zinn-octoate wurden bei Raumtemperatur in einen Rundkolben mit einem Volumen von 12 Litern gefüllt. Die Mischung wurde unter Rühren langsam auf 180 °C erhitzt und dann 3 Stunden lang bei dieser Temperatur (unter Rühren) belassen. Dabei wurde das entstehende Wasser durch Destillation bei Normaldruck entfernt.

Danach wurde die Mischung im Vakuum auf 220 °C erwärmt und bei dieser Temperatur unter einem Vakuum von 40 mbar belassen, bis eine Säurezahl von kleiner 1 mg KOH/g erreicht war. Der entstandene, flüssige Polyesterpolyol wies die folgenden Kennwerte auf:

| | |
|---|---|
| Hydroxylzahl: | 79.2 mg KOH/g |
| Säurezahl: | 0.7 mg KOH/g |
| Wasser: | 0.003 (Gew-%) |
| Viskosität: | 370 mPa·s (bei 75 °C) |
| Farbzahl: | 260 APHA/Hazen |

### Beispiel 5

4754.2 g Sebazinsäure, 2092.9 g Propandiol-1,3, 1600 ppm Irgafos 38 (von Ciba), 1 ppm Titantetrabutanolat und 5ppm Zinn-octoate wurden bei Raumtemperatur in einen Rundkolben mit einem Volumen von 12 Litern gefüllt. Die Mischung wurde unter Rühren langsam auf 180 °C erhitzt und dann 3 Stunden lang bei dieser Temperatur (unter Rühren) belassen. Dabei wurde das entstehende Wasser durch Destillation bei Normaldruck entfernt.

Danach wurde die Mischung im Vakuum auf 220 °C erwärmt und bei dieser Temperatur unter einem Vakuum von 40 mbar belassen, bis eine Säurezahl von kleiner 1 mg KOH/g erreicht war. Der entstandene, flüssige Polyesterpolyol wies die folgenden Kennwerte auf:

| | |
|---|---|
| Hydroxylzahl: | 73.0 mg KOH/g |
| Säurezahl: | 0.6 mg KOH/g |
| Wasser: | 0.004 (Gew.-%) |
| Viskosität: | 260 mPa·s (bei 75 °C) |
| Farbzahl: | 195 APHA/Hazen |

### Beispiel 6

4754.2 g Sebazinsäure, 2092.9 g Propandiol-1,3, 8000 ppm Irgafos 38 (von Ciba), 1 ppm Titantetrabutanolat und 5ppm Zinn-octoate wurden bei Raumtemperatur in einen Rundkolben mit einem Volumen von 12 Litern gefüllt. Die Mischung wurde unter Rühren langsam auf 180 °C erhitzt und dann 3 Stunden lang bei dieser Temperatur (unter Rühren) belassen. Dabei wurde das entstehende Wasser durch Destillation bei Normaldruck entfernt.

Danach wurde die Mischung im Vakuum auf 220 °C erwärmt und bei dieser Temperatur unter einem Vakuum von 40 mbar belassen, bis eine Säurezahl von kleiner 1 mg KOH/g erreicht war. Der entstandene, flüssige Polyesterpolyol wies die folgenden Kennwerte auf:

| | |
|---|---|
| Hydroxylzahl: | 73.7 mg KOH/g |
| Säurezahl: | 0.1 mg KOH/g |
| Wasser: | 0.002 (Gew.-%) |
| Viskosität: | 380 mPa·s (bei 75 °C) |
| Farbzahl: | 135 APHA/Hazen |

### Beispiel 7

4754.2 g Sebazinsäure, 2092.9 g Propandiol-1,3, 2200 ppm Irgafos TNPP (von Ciba), 1 ppm Titantetrabutanolat und 5ppm Zinn-octoate wurden bei Raumtemperatur in einen Rundkolben mit einem Volumen von 12 Litern gefüllt. Die Mischung wurde unter Rühren langsam auf 180 °C erhitzt und dann 3 Stunden lang bei dieser Temperatur (unter Rühren) belassen. Dabei wurde das entstehende Wasser durch Destillation bei Normaldruck entfernt.

Danach wurde die Mischung im Vakuum auf 220 °C erwärmt und bei dieser Temperatur unter einem Vakuum von 40 mbar belassen, bis eine Säurezahl von kleiner 1 mg KOH/g erreicht war. Der entstandene, flüssige Polyesterpolyol wies die folgenden Kennwerte auf:

| | |
|---|---|
| Hydroxylzahl: | 77.4 mg KOH/g |
| Säurezahl: | 0.55 mg KOH/g |
| Wasser: | 0.002 (Gew.-%) |
| Viskosität: | 380 mPa·s (bei 75 °C) |
| Farbzahl: | 150 APHA/Hazen |

### Beispiel 8

4754.2 g Sebazinsäure, 2092.9 g bio-Propandiol-1,3 (von DuPont), 800 ppm Irgafos TNPP (von Ciba), 1 ppm Titantetrabutanolat und 5ppm Zinn-octoat wurden bei Raumtemperatur in einen Rundkolben mit einem Volumen von 12 Litern gefüllt. Die Mischung wurde unter Rühren langsam auf 180 °C erhitzt und dann 3 Stunden lang bei dieser Temperatur (unter Rühren) belassen. Dabei wurde das entstehende Wasser durch Destillation bei Normaldruck entfernt.

Danach wurde die Mischung im Vakuum auf 220 °C erwärmt und bei dieser Temperatur unter einem Vakuum von 40 mbar belassen, bis eine Säurezahl von kleiner 1 mg KOH/g erreicht war. Der entstandene, flüssige Polyesterpolyol wies die folgenden Kennwerte auf:

| | |
|---|---|
| Hydroxylzahl: | 78,6 mg KOH/g |
| Säurezahl: | mg KOH/g |
| Wasser: | 0,60 (Gew.-%) |
| Viskosität: | 370 mPa·s (bei 75 °C) |
| Farbzahl: | 190 APHA/Hazen |

### Beispiel 9

4627.6 g Sebazinsäure, 2198.0 g Propandiol-1,3, 800 ppm Irgafos 38 (von Ciba), 1ppm Titantetrabutanolat und 5ppm Zinn-octoat wurden bei Raumtemperatur in einen Rundkolben mit einem Volumen von 12 Litern gefüllt. Die Mischung wurde unter Rühren langsam auf 180 °C erhitzt und dann 3 Stunden lang bei dieser Temperatur (unter Rühren) belassen. Dabei wurde das entstehende Wasser durch Destillation bei Normaldruck entfernt.

Danach wurde die Mischung im Vakuum auf 220 °C erwärmt und bei dieser Temperatur unter einem Vakuum von 40 mbar belassen, bis eine Säurezahl von kleiner 1 mg KOH/g erreicht war. Der entstandene, flüssige Polyesterpolyol wies die folgenden Kennwerte auf:

| | |
|---|---|
| Hydroxylzahl: | 115.6 mg KOH/g |
| Säurezahl: | 0.37 mg KOH/g |
| Wasser: | 0,003 (Gew.-%) |
| Viskosität: | 200 mPa·s (bei 75 °C) |
| Farbzahl: | 128 APHA/Hazen |

### Beispiel 10

4627.6 g Sebazinsäure, 2198.0 g Propandiol-1,3, 800 ppm Irgafos P-EPQ (von Ciba), 1 ppm Titantetrabutanolat und 5ppm Zinn-octoat

| | |
|---|---|
| Hydroxylzahl: | 116.1 mg KOH/g |
| Säurezahl: | 0.10 mg KOH/g |
| Wasser: | 0,005 (Gew.-%) |
| Viskosität: | 182 mPa·s bei 75 °C |
| Farbzahl: | 237 APHA/Hazen |

### Allgemeine Arbeitsvorschrift zur Herstellung thermoplastischer Polyurethane (TPU)

In einem 2-Literl Weißblecheimer wurden zu der in Tabelle 2 angegebenen Menge Polyol aus dem entsprechendem Beispiel oder Vergleichsbeispiel und die in Tabelle 2 angegeben Additive KV1 sowie S1-S3 zu dem 80°C warmen Polyesterpolyols gegeben. Nach anschließender Erwärmung der Mischung auf 80°C wurde gemäß Tabelle 2 MDI (4,4-Methyldiisocyanat) zugegeben und so lange gerührt, bis die Temperatur der exothermen Reaktion auf 110°C gestiegen war. Anschließend wurde die Reaktionsmasse in eine flache Schale gegossen und bei 125°C auf einer Heizplatte für 10 Minuten getempert. Danach wurde die entstandene Schwarte in einem Heizschrank für 15 h bei 80°C getempert. Die Schwarte wurde dann granuliert und gemäß allgemeinen Verarbeitungshinweisen für TPU zu 2 mm und 6 mm Prüfplatten verarbeitet.

**Tabelle 1: Einsatzstoffe für Polyurethane**

| Bezeichnung | Warenname | Chemische Zusammensetzung |
|---|---|---|
| Polyol | Polyesterpolyol | Entsprechend der vorstehenden Beispielen hergestellt oder kommerzielle Polyole: Butyladipate, Molekulargewicht: 1000g/mol, Funktionalitäten: 2 |
| KV1 | Kettenverlängerer | Butan-1,4-diol |
| Isocyanat | MDI | Diphenylmethandiisocyanat |
| S1 | Hydrolysestabilisator | Polymeres Carbodiimid |
| S2 | Antioxidanz 1 | Tetrakis-[methylen-(3,5-di-tert.-butyl-4-hydroxyhydrocinnamat)]- methan |
| S3 | Antioxidanz 2 | Tris(nonylphenyl)-phosphit |

**Tabelle 2: Übersicht der Zusammensetzung der TPU (Handgüsse)**

| | Polyesterpolyol gemäß vorstehenden Beispielen | | KV [g] | MDI [g] | S1 [g] | S2 [g] | S3 [g] |
|---|---|---|---|---|---|---|---|
| | Typ | [g] | | | | | |
| TPU 2¹ | Vergleichsbeispiel 2 | 1000 | 232,92 | 816,88 | 8,0 | - | - |
| TPU 3¹ | Beispiel 6 | 1000 | 232,58 | 814,21 | 8,0 | - | - |
| TPU 4¹ | Beispiel 7 | 1000 | 234,20 | 826,83 | 8,0 | 8,00 | - |
| TPU 5¹ | Beispiel 8 | 1000 | 234,74 | 832,04 | 10,00 | 7,40 | - |
| TPU 6² | gekauftes Polyol | 1000 | 149,04 | 670,00 | 8,00 | - | - |
| TPU 7² | gekauftes Polyol | 1000 | 149,04 | 670,00 | 8,00 | 7,78 | - |
| TPU 8 | Beispiel 3 | 700 | 174,73 | 662,80 | 5,60 | 7,78 | 0,00 |
| TPU 9 | Beispiel 3 | 700 | 174,73 | 662,80 | 5,60 | 7,84 | 0,78 |
| TPU 10¹ | Beispiel 9 | 700 | 175,86 | 671,54 | 5,60 | 7,84 | 0,78 |
| TPU 11¹ | Beispiel 10 | 700 | 176,01 | 672,75 | 5,60 | 7,84 | 0,78 |

| | | | | | | | |
|---|---|---|---|---|---|---|---|
| ¹) Rohstoff aus nachwachsenden Quellen ²) gekauftes Polyol: Butyladipate, Molekulargwicht: 1000 g/mol, Funktionalitäten: 2 gemäß Tabelle1 | | | | | | | |

**Tabelle 3: Mechanische Eigenschaften der Polyurethane**

| | Härte | Zugfestigkeit | Reißdehnung | Weiterreißwiderstand | Abrieb | Dichte | MFR (Melt-flow-rate) | YI (Yellow-Index, unget) |
|---|---|---|---|---|---|---|---|---|
| | [Shore D] | [MPa] | [%] | [N/mm] | [mm³] | [g/cm³] | [g/10min] | [ ] |
| gemessen nach Norm | DIN 53505 | DIN 53504 | DIN 53504 | DIN ISO 34-1, B (b) | DIN ISO 4649 | DIN EN ISO 1183-1, A | DIN EN ISO 1133 | ASTM E313 |
| TPU 2 | 50 | 34 | 470 | 114 | 86 | 1,189 | 43,3 _{(200°C/21,6kg)} | 29 |
| TPU 3 | 58 | 49 | 420 | 135 | 36 | 1,188 | 29,6 _{(200°C/ 21,6kg)} | 6,0 |
| TPU 4 | 49 | 52 | 420 | 132 | 26 | 1,188 | 15,4 _{(210°C/ 21,6kg)} | 8,2 |
| TPU 5 | 52 | 53 | 470 | 138 | 28 | 52 | 35,8 _{(210°C/10kg)} | 19 |
| TPU 6 | 51 | 68 | 480 | 109 | 35 | 1,216 | 35 _{(190°C/21,6kg)} | 5,8 |
| TPU 7 | 51 | 57 | 480 | 110 | 26 | 1,216 | 35,1 _{(190°C/21,6kg)} | 1,2 |
| TPU 8 | 51 | 26 | 470 | 117 | 120 | 1,199 | 77,5 _{(210°C/2, 16kg)} | 14,0 |
| TPU 9 | 50 | 27 | 450 | 126 | 114 | 1,198 | 63,0 _{(210°C/2, 16kg)} | 16,0 |
| TPU 10 | 64 | 50 | 460 | 171 | 37 | 1,2 | 37,7 _{(230°C/2,16kg)} | 11,4 |
| TPU 11 | 63 | 40 | 430 | 166 | 44 | 1,2 | 30,6 _{(230°C/2, 16kg)} | 13,1 |

Härte, Zugfestigkeit, Reißdehnung, Weiterreißwiderstand, Abrieb und Dichte wurden nach der jeweils angegebenen DIN-Norm gemessen.

Es folgt 1 Blatt Zeichnung.

## Patentansprüche

1. Verfahren zur Herstellung eines Polyesterpolyols umfassend die folgenden Verfahrensschritte:
(a) Herstellung einer Reaktionsmischung enthaltend die folgenden Komponenten:
A: mindestens eine aus natürlichen Rohstoffen gewonnene Carbonsäure mit mindestens zwei Säuregruppen, ausgewählt aus der Gruppe bestehend aus: Sebazinsäure, Azelainsäure, Dodecandisäure und Bemsteinsäure;
B: mindestens einen mehrwertigen Alkohol,
C: mindestens eine organische Phosphitverbindung,
D: mindestens eine Lewis-Säure;
(b) Erwärmen der Reaktionsmischung auf eine Temperatur von mindestens 160 °C und Abtrennung des bei der Reaktion entstehenden Wassers;
(c) Erwärmen der Reaktionsmischung auf eine Temperatur von mindestens 210 °C bei einem Druck unterhalb von 1013 mbar für einen Zeitraum von 0,1 bis 25 Stunden.

2. Verfahren gemäß Anspruch 1, **dadurch gekennzeichnet, dass** die Herstellung der Reaktionsmischung in Verfahrensschritt (a) dadurch erfolgt, dass zunächst die Komponenten A, B und D gemischt werden und erst anschließend die Komponente C hinzugefügt wird.

3. Verfahren gemäß einem der Ansprüche 1 oder 2, **dadurch gekennzeichnet, dass** es sich bei Komponente A um aus nachwachsenden Rohstoffen gewonnene Sebazinsäure handelt.

4. Verfahren gemäß einem der Ansprüche 1 bis 3, **dadurch gekennzeichnet, dass** es sich bei Komponente B um ein aliphatisches C₂ bis C₆- Diol handelt.

5. Verfahren gemäß einem der Ansprüche 1 bis 4, **dadurch gekennzeichnet, dass** es sich bei Komponente B um 1,3-Propandiol oder 1,4-Butandiol handelt.

6. Verfahren gemäß einem der Ansprüche 1 bis 5, **dadurch gekennzeichnet, dass** es sich bei Komponente C um mindestens eine organische Phosphitverbindung handelt, die ausgewählt ist aus der Gruppe bestehend aus Bis(2,4-di-tert-butyl-6-methylphenyl)-ethylphosphit, Tris(nonylphenyl)-phosphit oder das Reaktionsprodukt aus Phosphortrichlorid mit 1,1'-Biphenyl und 2,4-bis(tert.-Butyl)phenol.

7. Polyesterpolyole erhältlich durch ein Verfahren gemäß einem der Ansprüche 1 bis 6.

8. Polyesterpolyol gemäß Anspruch 7, wobei als Komponente A aus nachwachsenden Rohstoffen gewonnene Sebazinsäure und als Komponente B ein Diol verwendet werden.

9. Verfahren zur Herstellung eines Polyurethans durch Umsetzung eines Polyesterpolyols hergestellt nach einem Verfahren der Ansprüche 1 bis 6 mit einem oder mehreren organischen Diisocyanaten.

10. Thermoplastisches Polyurethan, erhältlich durch ein Verfahren nach Anspruch 9.

11. Verwendung eines Polyesterpolyols hergestellt nach einem Verfahren gemäß Anspruch 1 bis 6 zur Produktion von Polyurethanen.

12. Verwendung eines thermoplastischen Polyurethans gemäß Anspruch 10 zur Herstellung von Formkörpern, Schläuchen, Folien oder Fasern.

13. Formkörper, Folie, Schlauch oder Fasern hergestellt aus einem thermoplastischen Polyurethan gemäß Anspruch 10.

## Claims

1. A process for preparing a polyester polyol comprising the steps of:
(a) preparing a reaction mixture comprising the following components:
A: at least one carboxylic acid recovered from natural raw materials and having at least two acid groups, selected from the group consisting of: sebacic acid, azelaic acid, dodecanedioic acid and succinic acid;
B: at least one polyhydric alcohol,
C: at least one organic phosphite compound,
D: at least one Lewis acid;
(b) heating the reaction mixture to a temperature of at least 160°C and removing the water formed in the course of the reaction;
(c) heating the reaction mixture to a temperature of at least 210°C under a pressure below 1013 mbar for a period of time in the range from 0.1 to 25 hours.

2. The process according to claim 1 wherein the preparing of the reaction mixture in step (a) is effected by first mixing said components A, B and D and only then adding said component C.

3. The process according to either of claims 1 and 2 wherein said component A comprises sebacic acid recovered from renewable raw materials.

4. The process according to any one of claims 1 to 3 wherein said component B comprises an aliphatic C₂ to C₆ diol.

5. The process according to any one of claims 1 to 4 wherein said component B comprises 1,3-propanediol or 1,4-butanediol.

6. The process according to any one of claims 1 to 5 wherein said component C comprises at least one organic phosphite compound selected from the group consisting of bis(2,4-di-tert-butyl-6-methylphenyl) ethyl phosphite, tris(nonylphenyl) phosphite or the reaction product of phosphorus trichloride with 1,1'-biphenyl and 2,4-bis(tert-butyl)phenol.

7. A polyester polyol obtainable by a process according to any one of claims 1 to 6.

8. The polyester polyol according to claim 7 wherein sebacic acid recovered from renewable raw materials is used as component A and a diol is used as component B.

9. A process for preparing a polyurethane by reacting a polyester polyol prepared according to a process of claims 1 to 6 with one or more organic diisocyanates.

10. A thermoplastic polyurethane obtainable by a process according to claim 9.

11. The use of a polyester polyol prepared in a process according to claim 1 to 6 in the manufacture of polyurethanes.

12. The use of a thermoplastic polyurethane according to claim 10 in the manufacture of moldings, hoses, self-supporting film/sheet or fibers.

13. A molding, self-supporting film/sheet, hose or fiber manufactured from a thermoplastic polyurethane according to claim 10.

## Revendications

1. Procédé pour la préparation d'un polyesterpolyol, comprenant les étapes de procédé suivantes :
(a) préparation d'un mélange réactionnel contenant les composants suivantes :
A : au moins un acide carboxylique obtenu à partir de matières premières naturelles, présentant au moins deux groupes acides, choisi dans le groupe constitué par : l'acide sébacique, l'acide azélaïque, l'acide dodécanedioïque et l'acide succinique ;
B : au moins un alcool polyvalent,
C : au moins un composé organique de phosphite,
D : au moins un acide de Lewis ;
(b) chauffage du mélange réactionnel à une température d'au moins 160°C et séparation de l'eau formée lors de la réaction ;
(c) chauffage du mélange réactionnel à une température d'au moins 210°C à une pression inférieure à 1013 mbars pendant un laps de temps de 0,1 à 25 heures.

2. Procédé selon la revendication 1, **caractérisé en ce que** la préparation du mélange réactionnel dans l'étape de procédé (a) a lieu **en ce que** les composants A, B et D sont d'abord mélangés et ce n'est qu'ensuite que le composant C est ajouté.

3. Procédé selon l'une quelconque des revendications 1 ou 2, **caractérisé en ce qu'**il s'agit, pour le composant A, d'acide sébacique obtenu à partir de matières premières renouvelables.

4. Procédé selon l'une quelconque des revendications 1 à 3, **caractérisé en ce qu'**il s'agit, pour le composant B, d'un C₂-C₆-diol aliphatique.

5. Procédé selon l'une quelconque des revendications 1 à 4, **caractérisé en ce qu'**il s'agit, pour le composant B, de 1,3-propanediol ou de 1,4-butanediol.

6. Procédé selon l'une quelconque des revendications 1 à 5, **caractérisé en ce qu'**il s'agit, pour le composant C, d'au moins un composé organique du phosphite, qui est choisi dans le groupe constitué par le bis(2,4-di-tert-butyl-6-méthylphényl)-éthylphosphite, le tris(nonylphényl)-phosphite ou le produit de réaction de trichlorure de phosphore avec du 1,1'-biphényl et du 2,4-bis(tert-butyl)phénol.

7. Polyesterpolyols pouvant être obtenus par un procédé selon l'une quelconque des revendications 1 à 6.

8. Polyesterpolyol selon la revendication 7, de l'acide sébacique obtenu à partir de matières premières renouvelables étant utilisé comme composant A et un diol étant utilisé comme composant B.

9. Procédé pour la préparation d'un polyuréthane par transformation d'un polyesterpolyol préparé selon un procédé des revendications 1 à 6 avec un ou plusieurs diisocyanates organiques.

10. Polyuréthane thermoplastique pouvant être obtenu par un procédé selon la revendication 9.

11. Utilisation d'un polyesterpolyol préparé selon un procédé selon la revendication 1 à 6 pour la production de polyuréthanes.

12. Utilisation d'un polyuréthane thermoplastique selon la revendication 10 pour la fabrication de corps moulés, de tuyaux flexibles, de feuilles ou de fibres.

13. Corps moulé, feuille, tuyau flexible ou fibres produits à partir d'un polyuréthane thermoplastique selon la revendication 10.
